# EUROPÄISCHE PATENTANMELDUNG

(11) **EP 0 956 995 A2**
(43) Veröffentlichungstag der Anmeldung: **17.11.1999**
(21) Anmeldenummer: 99107001.2
(22) Anmeldetag: 09.04.1999
(51) Int. Cl.: B60N 3/10

(54) **Halterung für einen Getränkebehälter in einem Kraftwagen**

(30) Priorität: 13.05.1998 DE 19821313
(71) Anmelder: fischerwerke Artur Fischer GmbH & Co. KG, D-72178 Waldachtal (DE)
(72) Erfinder: Plocher, Bernd, 72108 Rottenburg-Seebronn (DE); Nienhaus, Ulrich, 72202 Nagold-Hochdorf (DE); Kassel, Armin, 71296 Heimsheim (DE); Notz, Friedrich, 72250 Freudenstadt (DE); Breunig, Steffen, 74834 Elztal-Dallau (DE)

(57) **Zusammenfassung**

Die Erfindung betrifft eine Halterung (10) für einen Getränkebehälter, die in eine Mittelkonsole eines Personenkraftwagens einbaubar ist. Zum platzsparenden Einbau weist die Halterung (10) eine erste Getränkebehälteraufnahme (36) auf, die an einem Schlitten (22) in einer hochkant stehenden, versenkten Grundstellung nach oben verschiebbar und anschließend in eine horizontale Gebrauchsstellung verschwenkbar ist. In der ersten Getränkebehälteraufnahme (36) ist eine zweite Getränkebehälteraufnahme (50) seitlich herausschwenkbar untergebracht.

## Beschreibung

Die Erfindung betrifft eine Halterung für einen Getränkebehälter in einem Kraftwagen mit den Merkmalen des Oberbegriffs des Anspruchs 1. Sie ist insbesondere zum versenkten Einbau in eine Mittelkonsole des Kraftwagens vorgesehen.

Eine derartige Vorrichtung ist bekannt aus der DE 44 29 515 C1. Die bekannte Vorrichtung weist eine Getränkebehälteraufnahme mit einer Einstellöffnung zum Einstellen des Getränkebehälters, beispielsweise einer Tasse, eines Bechers oder einer Getränkebüchse, auf. Die Getränkebehälteraufnahme ist waagerecht angeordnet und vertikal aus einer versenkten Grundstellung in eine angehobene Gebrauchsstellung verschiebbar geführt. Die Getränkebehälteraufnahme hat näherungsweise die Form eines Quaders. dessen Breite etwas größer als ein Durchmesser des zu haltenden Getränkebehälters ist. Die bekannte Halterung hat den Nachteil, daß sie einen Einbauraum mit einer Grundfläche benötigt, deren Länge und Breite größer als der Durchmesser des aufzunehmenden Getränkebehälters ist.

Der Erfindung liegt die Aufgabe zugrunde, eine Halterung für einen Getränkebehälter, die versenkbar in einer Mittelkonsole eines Kraftwagens einbaubar ist, so auszubilden, daß sie einen Einbauraum mit kleiner Grundfläche benötigt.

Diese Aufgabe wird erfindungsgemäß durch die Merkmale des Anspruchs 1 gelöst. Die Getränkebehälteraufnahme der erfindungsgemäßen Halterung ist aus einer seitlich liegenden Grundstellung in eine horizontale stehende Gebrauchsstellung, in der ein Getränkebehälter in stehender Lage in die Getränkebehälteraufnahme einstellbar ist, schwenkbar. Mit seitlich liegender Grundstellung ist gemeint, daß die Getränkebehälteraufnahme gegenüber der Gebrauchsstellung um ca. 90° zu einer Seite geschwenkt ist, so daß sich in der Grundstellung eine Seite (Langseite oder Schmalseite) der Getränkebehälteraufnahme unten und die gegenüberliegende Seite oben befindet. Ein Boden oder eine Unterseite der Getränkebehälteraufnahme steht in der Grundstellung senkrecht. Ist die Getränkebehälteraufnahme in etwa zylindrisch ausgebildet, wird sie aus der liegenden Grundstellung mit horizontaler Achse in die stehende Gebrauchsstellung mit vertikaler Achse verschwenkt.

Um den Getränkebehälter sicher in einem fahrenden Kraftwagen zu halten, genügt eine Getränkebehälteraufnahme, deren Höhe geringer als der Durchmesser des einzustellenden Getränkebehälters ist. Die Getränkebehälteraufnahme läßt sich also mit einer Höhe ausbilden, die kleiner als eine Breite oder eine Länge der Getränkebehälteraufnahme bzw. deren Durchmesser ist. Durch das Verschwenken in die seitlich liegende Grundstellung wird daher ein Einbauraum benötigt, dessen Grundfläche eine Seitenlänge aufweist, die etwas größer als die Höhe der Getränkebehälteraufnahme (in der Gebrauchsstellung) ist. Die erforderliche Grundfläche des Einbauraums läßt sich dadurch verringern. Weiterer Vorteil der erfindungsgemäßen Halterung ist, daß eine obere Öffnung des Einbauraums für die Halterung in der versenkten Grundstellung der Getränkebehälteraufnahme von der in der seitlich liegenden Grundstellung oberen Seite (Schmalseite oder Langseite) der Getränkebehälteraufnahme verschlossen sein kann. Es ist nicht notwendig, daß die Getränkebehälteraufnahme in ihrer versenkten Grundstellung waagrecht liegt, sie kann auch, insbesondere wenn der zur Verfügung stehende Einbauraum schräg ist, schräg liegen. Der Schwenkwinkel weicht dann entsprechend der Schräge des Einbauraums von 90° ab.

Bei einer Weiterbildung der Erfindung weist die Halterung einen vertikal oder schräg zwischen einer unteren und einer oberen Stellung verschiebbaren Schlitten auf, an dem die Getränkebehälteraufnahme mit der Schwenkeinrichtung angebracht ist. Die Getränkebehälteraufnahme wird bei dieser Weiterbildung der Erfindung in ihrer seitlich liegenden, versenkten Grundstellung nach oben verschoben und anschließend in die stehende Gebrauchsstellung verschwenkt. Diese Weiterbildung der Erfindung hat den Vorteil, daß die Schwenkbewegung der Getränkebehälteraufnahme außerhalb des Einbauraums erfolgt, wodurch kein vergrößerter Einbauraum für die Schwenkbewegung erforderlich ist, so daß der Einbauraum klein gehalten werden kann.

Die Schwenkeinrichtung kann beispielsweise als Schwenkgelenk mit einer Schwenkachse ausgebildet sein. Auch ist es möglich, die Schwenkeinrichtung beispielsweise mit einem Hebelgetriebe oder einer Bogenführung auszubilden.

In bevorzugter Ausgestaltung weist die Erfindung ein Schwenkfederelement auf, das die Getränkebehälteraufnahme aus der Grundstellung in die Gebrauchsstellung verschwenkt. Um die Getränkebehälteraufnahme gegen die Kraft des Schwenkfederelements in der Grundstellung zu halten, ist eine erste Verriegelungsvorrichtung vorgesehen. Diese kann von Hand entriegelt werden. Bei einer den Schlitten aufweisenden Ausgestaltung der Erfindung wird die Verriegelungseinrichtung selbsttätig entriegelt, wenn der Schliffen seine obere Endstellung erreicht.

Um die Getränkebehälteraufnahme gegen unbeabsichtigtes Verschwenken aus der Gebrauchsstellung heraus zu sichern, ist bei einer Ausgestaltung der Erfindung eine zweite Verriegelungseinrichtung vorgesehen, die die Getränkebehälteraufnahme in ihrer horizontal stehenden Gebrauchsstellung verriegelt.

Bei einer bevorzugten Ausgestaltung der Erfindung ist ein Schlittenfederelement vorgesehen, das den Schlitten von unten nach oben verschiebt. Eine Schlittenverriegelung hält den Schlitten bei Nichtgebrauch der Halterung in seiner unteren Stellung, in der sich die Getränkebehälteraufnahme in ihrer seitlich liegenden Grundstellung befindet. Durch Entriegeln der Schlittenverriegelung wird die Getränkebehälteraufnahme selbsttätig nach oben verfahren und anschließend selbsttätig in die horizontale Gebrauchsstellung verschwenkt.

Bei einer Ausgestaltung der Erfindung weist die Halterung zwei Getränkebehälteraufnahmen auf, deren zweite beispielsweise seitlich herausschwenkbar in der ersten Getränkebehälteraufnahme untergebracht ist. Wird lediglich eine Getränkebehälteraufnahme benötigt, kann die zweite Getränkebehälteraufnahme in der ersten Getränkebehälteraufnahme verbleiben.

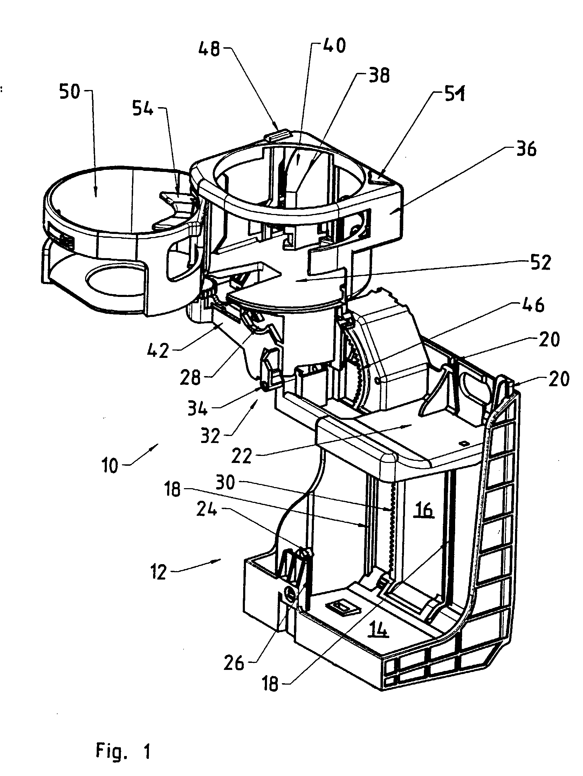

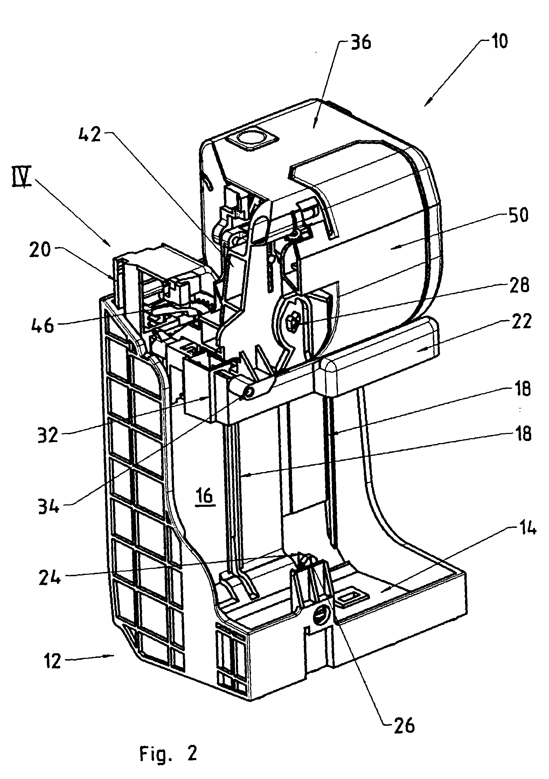

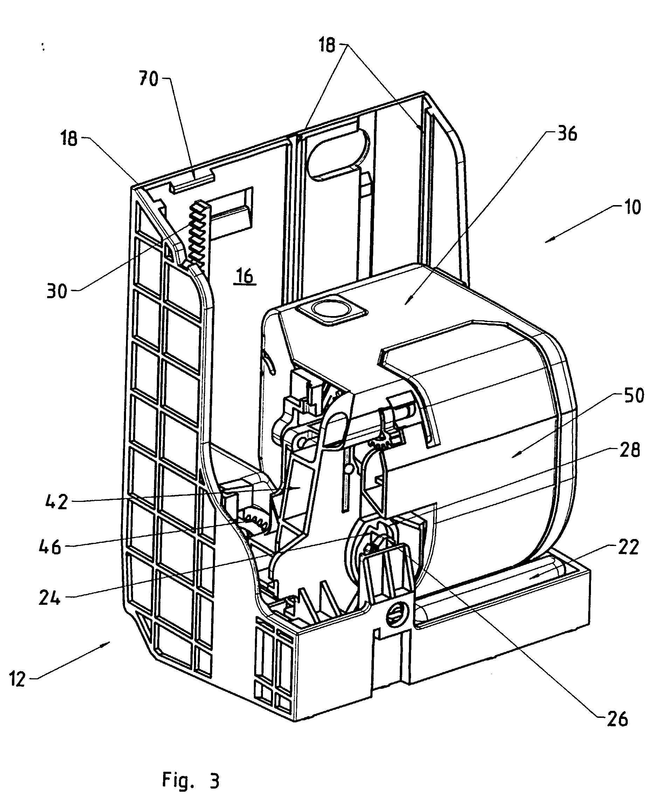

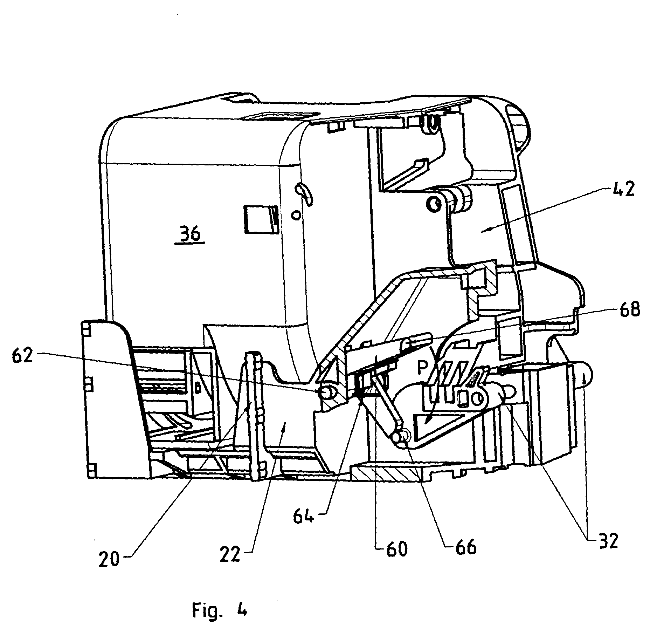

Die Erfindung wird nachfolgend anhand eines in der Zeichnung dargestellten Ausführungsbeispiels näher erläutert. Die Figuren 1 bis 3 zeigen eine erfindungsgemäße Halterung in einer Gebrauchsstellung (Figur 1), in einer Zwischenstellung (Figur 2) und in einer Grundstellung (Figur 3) sowie Figur 4 eine Einzelheitdarstellung gemäß Pfeil IV in Figur 2.

Die in Figuren 1 bis 3 dargestellte, insgesamt mit 10 bezeichnete, erfindungsgemäße Halterung weist ein Gestell 12 mit einem Boden 14 und einer dazu senkrechten, in Einbaulage der Halterung 10 vertikalen Seitenwand 16 auf. Die Halterung 10 ist zum Einbau in einen Einbauraum einer nicht dargestellten Mittelkonsole eines Personenkraftwagens vorgesehen. Der Einbauraum weist eine prismatische, zur Form des Gestells 12 komplementäre Form mit rechteckiger Grundfläche auf.

Am Gestell 12 sind an beiden Seiten und in der Mitte der Seitenwand 16 senkrecht nach oben verlaufende Führungsnuten 18 angebracht, in welchen drei Federn 20 verschiebbar aufgenommen sind. Die Federn 20 sind einstückig mit einem Schlitten 22. Führungsnuten 18 und Federn 20 bilden eine Schiebeführung des Schlittens 22, mit der der Schlitten 22 vertikal verschiebbar am Gestell 12 geführt ist. Die Verschiebung des Schlittens 22 erfolgt mit einer an sich bekannten, in der Zeichnung nicht sichtbaren Rollfeder, also einer sich selbst aufrollenden Bandfeder, die ein Schlittenfederelement bildet, das den Schlitten 22 an der Seitenwand 16 des Gestells 12 nach oben zieht.

Der Schlitten 22 ist gegen die Kraft des nicht sichtbaren Schlittenfederelements nach unten zum Boden 14 des Gestells 12 drückbar. In seiner unteren Stellung wird der Schlitten 22 mit einer Schlittenverriegelung gehalten, die in an sich bekannter Weise als Herzkurvenverriegelung (Push-Push-Mechanik) ausgebildet ist. Die Schlittenverriegelung weist einen im Querschnitt dreiecksförmigen Zapfen 24 an einem Ende eines Schwenkriegels 26 auf, der schwenkbar am Gestell 12 angebracht ist. Desweiteren weist die Herzkurvenverriegelung eine Herzkurve 28 auf, mit der der Zapfen 24 in Eingriff gelangt und dadurch den Schlitten 22 verriegelt, wenn der Schlitten 22 in seine untere Stellung verschoben wird. Durch einen kurzen Druck des Schlittens 22 nach unten wird die Schlittenverriegelung in an sich bekannter Weise entriegelt.

Die Verschiebung des Schlittens 22 wird mittels eines an sich bekannten, in der Zeichnung nicht sichtbaren Rotationsdämpfers gedämpft, dessen Zahnrad mit einer an der Seitenwand 16 senkrecht verlaufend angebrachten Zahnstange 30 kämmt.

Die Halterung 10 weist eine Schwenkeinrichtung in Form eines Schwenkgelenks 32 auf Das Schwenkgelenk 32 umfaßt einen Schwenkstift 34 aus Metall, der horizontal und senkrecht zur Seitenwand 16 des Gestells 12 an einem Rand des Schlittens 22 angebracht ist. Mittels des Schwenkgelenks 32 ist eine Getränkebehälteraufnahme 36 aus einer seitlich liegenden Grundstellung, wie sie in Figuren 2 und 3 dargestellt ist, in eine horizontale, stehende Gebrauchsstellung, wie in Figur 1 dargestellt, schwenkbar mit dem Schlitten 22 verbunden. Die Getränkebehälteraufnahme 36 ist in etwa quaderförmig mit näherungsweise quadratischer Grundfläche, wobei eine Ecke der quadratischen Grundfläche durch eine Viertelkreisbogen ersetzt ist. Die Getränkebehälteraufnahme 36 weist eine Einstellöffnung 38 kreisrunden Querschnitts zum Einstellen beispielsweise einer Getränkebüchse auf. Die Getränkebehälteraufnahme 36 ist in an sich bekannter Weise mit einem federbetätigt in die Einstellöffnung 38 verschwenkenden Ausgleichsflügel 40 versehen, der beim Einstellen eines Getränkebehälters in die Einstellöffnung 38 nach außen gedrückt wird. Der Ausgleichsflügel 40 drückt einen in die Einstellöffnung 38 eingestellten Getränkebehälter gegen eine gegenüberliegende Seite der Einstellöffnung 38 und bewirkt dadurch einen sicheren Halt von Getränkebehältern unterschiedlichen Durchmessers in der Getränkebehälteraufnahme 36.

An ihrer Unterseite weist die Getränkebehälteraufnahme 36 einen mit ihr einstückigen, verrippten Unterbau 42 auf, an dem das Schwenkgelenk 32 ausgebildet ist. Desweiteren ist die Herzkurve 28 der Schlittenverriegelung an einer Seite des Unterbaus 42 der Getränkebehälteraufnahme 36 angebracht. Zum Verschwenken der ersten Getränkebehälteraufnahme 36 aus ihrer seitlich liegenden Grundstellung (Figur 2) in ihre horizontale, stehende Gebrauchsstellung (Figur 1) ist ein Schwenkfederelement in Form einer in der Zeichnung nicht sichtbaren Schenkelfeder vorgesehen, deren einer Schenkel am Schlitten 22 und deren anderer Schenkel am Unterbau 42 der ersten Getränkebehälteraufnahme 36 angreift. Die Schwenkbewegung der ersten Getränkebehälteraufnahme 36 wird mit einem in der Zeichnung nicht sichtbaren Rotationsdämpfungselement gedämpft, dessen Zahnrad mit einem Innenzahnradsegment 46 kämmt, das fest am Schlitten 22 angebracht ist. Das Innenzahnradsegment 46 ist koaxial zum Schwenkstift 34 des Schwenkgelenks 32 angeordnet und erstreckt sich über einen Kreisbogen, der länger als ein Viertelkreis und kürzer als ein Halbkreis ist.

Die erfindungsgemäße Halterung 10 weist eine Verriegelungseinrichtung auf, die die erste Getränkebehälteraufnahme 36 in ihrer seitlich liegenden Grundstellung gegen die Kraft des in der Zeichnung nicht sichtbaren Schwenkfederelements verriegelt, wenn der Schlitten 22 sich nicht in seiner oberen Stellung befindet. Diese in Figur 4 dargestellte Verriegelungseinrichtung weist einen zweiarmigen Verriegelungshebel 60 auf, der um einen Schwenkstift 62 schwenkbar mit dem Unterbau 42 der Getränkebehälteraufnahme 36 verbunden ist. Der Schwenkstift 62 ist parallel und mit Abstand in etwa gleicher Höhe zum Schwenkstift des Schwenkgelenks 32 der Getränkebehälteraufnahme 36 angeordnet. Der Verriegelungshebel 60 wird von einer Schenkelfeder 64 in Richtung des Pfeils P verschwenkt, in der er einen Zapfen 66 übergreift, wenn sich die Getränkebehälteraufnahme 36 in ihrer seitlich liegenden Grundstellung befindet. Diese Stellung ist in Figur 4 dargestellt. Der Zapfen 66 ist seitlich abstehend mit Abstand vom Schwenkgelenk 32 am Unterbau 42 der Getränkebehälteraufnahme 36 angebracht. Der den Zapfen 66 der Getränkebehälteraufnahme 36 übergreifenden Verriegelungshebel 60 verriegelt die Getränkebehälteraufnahme 36 in ihrer seitlich liegenden Grundstellung gegen die Kraft der in der Zeichnung nicht sichtbaren Schenkelfeder, welche die Getränkebehälteraufnahme 36 in Richtung der horizontal stehenden Gebrauchsstellung drückt.

Aus ihrer seitlich liegenden Grundstellung wird die Getränkebehälteraufnahme 36 selbsttätig entriegelt wenn der Schlitten 22 seine obere Endstellung erreicht. Ein seitlich abstehender, mit dem Verriegelungshebel 60 einstückiger Entriegelungszapfen 68 stößt kurz vor Erreichen der oberen Endstellung des Schlittens 22 gegen einen Anschlag 70 (Figur 3), der oben an der Seitenwand 16 des Gestells 12 angeordnet ist. Der Anschlag 70 verschwenkt den Verriegelungshebel 60 um einen kleinen Winkel gegen die Kraft der Schenkelfeder 64 entgegen der Pfeilrichtung P in Figur 4, so daß der Zapfen 66 am Untergestell 42 der Getränkebehälteraufnahme 36 vom Verriegelungshebel 60 freikommt. Die Getränkebehälteraufnahme 36 ist entriegelt und wird von der nicht sichtbaren Schenkelfeder in die horizontal stehende Gebrauchsstellung nach oben verschwenkt. Nach manueller Entriegelung der Herzkurvenverriegelungseinrichtung 24, 26, 28 durch kurzes Nachuntendrücken der ersten Getränkebehälteraufnahme 36 verfährt diese aus ihrer versenkten, hochkant stehenden Grundstellung (Figur 3) zusammen mit dem Schlitten 22 federbetätigt nach oben (Figur 2) und verschwenkt anschließend in ihre horizontale Gebrauchsstellung (Figur 1).

Um ein versehentliches Verschwenken der Getränkebehälteraufnahme 36 zu verhindern weist die Halterung 10 eine zweite Verriegelungseinrichtung auf, die die erste Getränkebehälteraufnahme 36 in ihrer horizontalen stehenden Gebrauchsstellung verriegelt. Die zweite Verriegelungseinrichtung ist manuell durch Niederdrücken einer Taste 48 an einer Oberseite der ersten Getränkebehälteraufnahme 36 entriegelbar.

In der ersten Getränkebehälteraufnahme 36 ist eine zweite Getränkebehälteraufnahme 50 mit im wesentlichen zylindrischer Form seitlich herausschwenkbar aufgenommen. Zum Herausschwenken der zweiten Getränkebehälteraufnahme 50 ist die erste Getränkebehälteraufnahme 36 mit einer Ausnehmung 52 versehen, die sich über einen Teil eines Umfangs der Einstellöffnung 38 der ersten Getränkebehälteraufnahme 36 erstreckt. Die zweite Getränkebehälteraufnahme 50 weist an einer Stelle ihres Umfangs einen nach oben und einen nach unten abstehenden, in der Zeichnung nicht sichtbaren Schwenkzapfen auf, die in komplementäre Löcher an einer Ecke der ersten Getränkebehälteraufnahme 36 eingreifen, auf. Die Schwenkbewegung erfolgt in an sich bekannter Weise federbetätigt und wird mittels eines in der Zeichnung nicht sichtbaren, an sich bekannten Rotationsdämpfers gedämpft. In ihrer in die erste Getränkebehälteraufnahme 36 eingeschwenkten Stellung ist die zweite Getränkebehälteraufnahme 50 mittels einer Verriegelungseinrichtung verriegelt, die mit einer Taste 51 auf der Oberseite der ersten Getränkebehälteraufnahme 36 lösbar ist. Die zweite Getränkebehälteraufnahme 50 weist eine um eine horizontale Achse schwenkbare Ausgleichsklappe 54 auf, die federbetätigt in die zweite Getränkebehälteraufnahme 50 hineinschwenkt und dadurch Getränkebehälter unterschiedlichen Durchmessers sicher hält.

Das Gestell 12, der Schlitten 22, die beiden Getränkebehälteraufnahmen 36, 50 und weitere Kleinteile der Halterung 10 sind als Spritzgießteile aus Kunststoff hergestellt.

## Patentansprüche

1. Halterung für einen Getränkebehälter in einem Kraftwagen, mit einer ersten Getränkebehälteraufnahme, die aus einer versenkten Grundstellung in eine Gebrauchsstellung bewegbar ist, **dadurch gekennzeichnet**, daß die Halterung (10) eine Schwenkeinrichtung (32) aufweist, mit der die Getränkebehälteraufnahme (36) verbunden und mit der die erste Getränkebehälteraufnahme (36) aus einer im wesentlichen seitlich liegenden Grundstellung in eine horizontal stehende Gebrauchsstellung schwenkbar ist.

2. Halterung nach Anspruch 1, dadurch gekennzeichnet, daß die Halterung (10) eine Schiebeführung (18, 20) aufweist, mit der sie aus der versenkten Grundstellung nach oben verschiebbar geführt ist.

3. Halterung nach Anspruch 2, dadurch gekennzeichnet, daß die Halterung (10) einen Schlitten (22) aufweist, der an der Schiebeführung (18, 20) von unten nach oben verschiebbar geführt ist und mit dem die Getränkebehälteraufnahme (36) über die Schwenkeinrichtung (32) schwenkbar verbunden ist.

4. Halterung nach Anspruch 1, dadurch gekennzeichnet, daß die Halterung (10) ein Schwenkfederelement aufweist, das die Getränkebehälteraufnahme (36) an der Schwenkeinrichtung (32) aus der Grundstellung in die Gebrauchsstellung verschwenkt, und daß die Halterung (10) eine erste Verriegelungseinrichtung aufweist, die die Getränkebehälteraufnahme (36) gegen die Kraft des Schwenkfederelements in der Grundstellung hält.

5. Halterung nach Anspruch 4, dadurch gekennzeichnet, daß die erste Verriegelungseinrichtung durch Erreichen einer oberen Endstellung des Schlittens (22) selbsttätig entriegelt wird.

6. Halterung nach Anspruch 1, dadurch gekennzeichnet, daß die Halterung (10) eine zweite Verriegelungseinrichtung aufweist, die die erste Getränkebehälteraufnahme (36) in der horizontal stehenden Gebrauchsstellung fixiert.

7. Halterung nach Anspruch 4, dadurch gekennzeichnet, daß die Halterung (10)ein Schlittenfederelement aufweist, das den Schlitten (22) von unten nach oben verschiebt, und daß die Halterung (10) eine Schlittenverriegelung (24, 26, 28) aufweist, die den Schlitten (22) gegen die Kraft des Schlittenfederelements in seiner unteren Stellung hält.

8. Halterung nach Anspruch 1, dadurch gekennzeichnet, daß die Halterung (10) eine zweite Getränkebehälteraufnahme (50) aufweist, die herausbewegbar an der ersten Getränkebehälteraufnahme (36) angebracht ist.
